# EUROPEAN PATENT APPLICATION

(11) **EP 4 588 719 A1**
(43) Date of publication of application: **23.07.2025**
(21) Application number: 24275002.4
(22) Date of filing: 16.01.2024
(51) Int. Cl.: B60P 1/64, B64F 1/32

(54) **PAYLOAD LOADING APPARATUS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An apparatus for loading a payload into a vehicle, the apparatus comprising: a payload transporter comprising a cradle configured to support the payload; one or more winches configured to be removably attached to a vehicle; one or more fixing points configured to be removably attached to the vehicle; and one or more lifting straps configured to be secured between the one or more winches and the one or more fixing points and to lift the cradle from the payload transporter into a payload bay of the vehicle.

## Description

### FIELD

The present invention relates to an apparatus for loading a payload into a vehicle and in particular to an apparatus having at least one removable fixing point and at least one removeable winch.

### BACKGROUND

Future air platforms will likely have internal payload bays. These are typically just large enough to fit the payload, but rarely have sufficient access for personnel to make physical and electrical connections. There is a need to keep internal payload bays as small as possible, since internal payload bay size is a significant driver of overall airframe size, the amount of fuel that can be carried and possibly, the number of engines required. Also, the constraints on the air platform design due to the undercarriage can mean that the height of the undercarriage above ground will be low, thereby making access to personnel and payload transportation and the loading of other equipment difficult.

Conventional loading equipment and procedures have been developed for loading payloads such as weapons and other stores to hardpoints mounted on the fuselage or wings of aircraft. Internal payload bays have either not existed in operational aircraft for many years or, where these did exist, the ground clearance and bay size was sufficient to allow access of conventional hydraulic loading equipment and personnel. These conventional methods are not workable for small internal payload bays that will likely exist on future aircraft, where access to the internal payload bays will be restricted.

### SUMMARY

According to an aspect of the present invention, there is provided an apparatus for loading a payload into a vehicle, the apparatus comprising: a payload transporter comprising a cradle configured to support the payload; one or more winches configured to be removably attached to a vehicle; one or more fixing points configured to be removably attached to the vehicle; and one or more lifting straps configured to be secured between the one or more winches and the one or more fixing points and to lift the cradle from the payload transporter into a payload bay of the vehicle.

The payload transporter may further comprise a plurality of alignment lasers configured to project a beam of visible light onto an underside of the vehicle, to allow for visual verification of an alignment of the payload transporter with respect to the payload bay of the vehicle.

The payload transporter may further comprise a plurality of alignment sensors configured to allow the payload transporter to be accurately positioned with respect to the payload bay of the vehicle. Each of the plurality of alignment sensors may comprise a light source and a light sensor for detecting light reflected from a respective alignment target disposed on the vehicle.

The alignment sensors may comprise alignment lasers configured to be directed at one or more laser alignment targets on the vehicle and a corresponding light sensor configured to detect the light reflected from the laser alignment targets.

The plurality of alignment sensors may comprise two alignment sensors positioned on opposite sides of the payload transporter. The plurality of alignment sensors may comprise four alignment sensors positioned in pairs on opposite sides of the payload transporter.

The apparatus may comprises a user interface configured to indicate an alignment of the payload transporter with respect to the vehicle.

The payload may comprise one or more payload attachment lugs, and wherein the plurality of alignment sensors are configured to facilitate the positioning on the payload transporter such that the one or more payload attachment lugs are aligned with respective payload attachment points disposed within the payload bay of the vehicle.

The one or more lifting straps may be configured to run freely around one or more fixed runners or pulleys disposed within the payload bay of the vehicle. The one or more lifting straps may be configured to pass underneath the cradle and to slide with respect to the cradle during lifting. The cradle may comprise one or more slots to guide the one or more lifting straps. Each of the one or more slots may have at least one roller disposed therein to facilitate sliding of the lifting strap. The one or more lifting straps may each comprise a plurality of integrated rollers configured to facilitate sliding of the lifting strap.

The apparatus may comprise two fixing points configured to be removably attached to the vehicle, two winches configured to be removably attached to a vehicle and two lifting straps, each lifting strap configured to be secured between a respective winch and fixing point.

A first fixing point may be configured to be secured to a first side surface of an internal payload bay of the vehicle, at or towards the front end of the internal payload bay. A second fixing point may be configured to be secured to a first side surface of an internal payload bay of the vehicle, at or towards the rear end of the internal payload bay. A first winch may be configured to be secured to a second side surface of an internal payload bay of the vehicle, substantially opposite the first fixing point. A second winch may be configured to be secured to a second side surface of an internal payload bay of the vehicle, substantially opposite the second fixing point.

The payload transporter may comprise a wheeled trolly. The payload transporter may comprise at least one motor for moving the payload transporter. The vehicle may be an aircraft.

### BRIEF DESCRIPTION OF THE FIGURES

Embodiments of the invention will now be described by way of example only with reference to the figures, in which:
Figure 1 shows a schematic illustration of the underside and payload bay of a vehicle;
Figure 2 shows a schematic illustration of the underside and payload bay of a vehicle, along with an apparatus illustrating aspects of the present invention;
Figure 3 shows a schematic illustration of the underside and payload bay of a vehicle, along with an apparatus illustrating aspects of the present invention;
Figure 4 shows a side view of a payload transporter and cradle;
Figure 5 shows a perspective view of the payload transporter and cradle; and
Figure 6 shows an alternative embodiment of a lifting strap.

### DETAILED DESCRIPTION

Since the use of conventional loading systems is not workable given the low ground clearance of the future air platforms, one solution may be to include the loading system permanently within the payload bay of the aircraft. However, this would increase the weight of the aircraft. The present invention is a means to enable a level of automatic loading of payloads without the need for heavy, permanently attached loading systems such as winches. Although this invention uses winches, these are removable from the aircraft before flight. The apparatus of the invention uses a low profile payload transporter which can move a payload underneath an aircraft with a low ground clearance. Means of ensuring accurate positioning of the payload transporter are also provided allowing a technician to accurately position the payload and then lift it into a payload bay, without needing to access the payload bay during the lifting procedure. Prior to positioning the payload transporter, removable fixing points, winches and lifting straps are attached to the aircraft. These are then removed before flight to reduce the take-off weight of the aircraft.

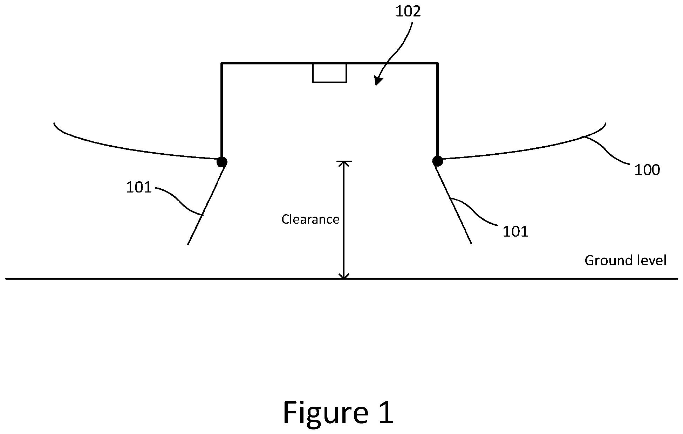

Referring to Figure 1, a schematic illustration of the underside and payload bay 102 of a vehicle 100, such as an aircraft, is shown. Figure 1 illustrates one of the problems encountered by some aircraft with internal payload bays, which is that the clearance between the underside of the fuselage and the ground is low, restricting access to the payload bay for both payload transporters and personnel. The issue may be worsened when the payload bay doors 101 are open, since this may further restrict access, particularly from the side.

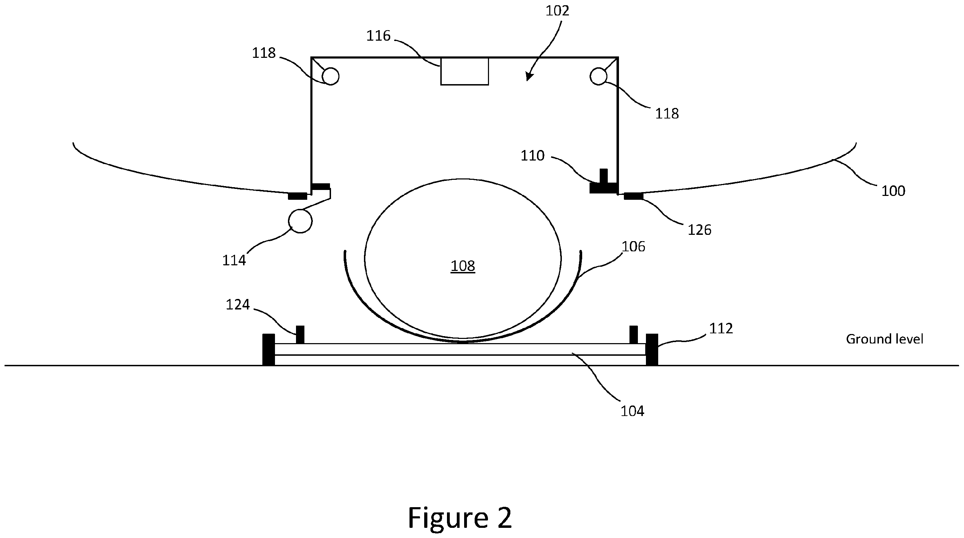

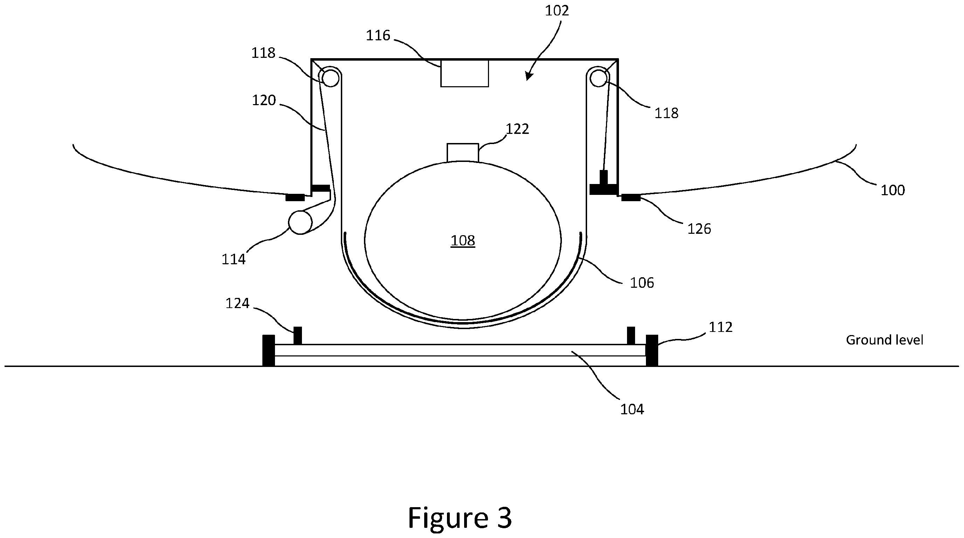

Referring to Figure 2 and Figure 3, schematic illustrations of the underside and payload bay 102 of a vehicle 100, such as an aircraft, are shown along with an apparatus illustrating aspects of the present invention. The payload bay doors have been omitted from Figures 2 and 3 for improved clarity. The payload bay 102 may be an internal payload bay, such that when the payload bay doors are closed, any payload is completely enclosed within the vehicle 100. The apparatus consists of multiple parts. A payload transporter 104 comprises a cradle 106 for supporting a payload 108. Note that the payload 108 is not part of the apparatus. The payload transporter 104 may take the form of a low profile trolley, with a number of wheels 112 providing mobility. The wheels 112 may instead by replaced with tracks or skids.

The cradle 106 holds the payload 104 as it is transported and lifted up into the payload bay 102. In Figure 2 the cradle 106 is resting on the payload transporter 104 and the lifting straps have been omitted. In Figure 3 the cradle 106 and payload 108 are in the process of being lifted up into the payload bay 102 by the lifting straps 120.

In Figure 2, the cradle 106 is illustrated as having a concave shape, to support a rounded payload, however the cradle 106 may have any suitable shape. The internal and external surfaces of the cradle 106 may have different shapes. The cradle 106 rests on an upper surface of the payload transporter 104. The cradle 106 may be releasably secured to the payload transporter 104 with one or more elements, such as pins, straps or moveable arms. These may be released when the payload transporter 104 is in position and the cradle 106 and payload 108 need to be lifted from the payload transporter 104.

A fixing point 110 is removably attached to the vehicle 100 on one side of the payload pay 102. A hole may be provided in the structure of the vehicle 100 into which the fixing point 110 can be inserted. The hole may be threaded. The fixing point 110 may have a corresponding protrusion for insertion into the hole in order to temporarily secure the fixing point 110 to the structure of the vehicle 100. In some other embodiments, the structure of the vehicle 100 may have a hook, or other protruding element, onto which the fixing point 110 can be attached. The hole, hook or other protruding element may be provided on a side wall of the internal payload bay 102 of the vehicle, close to the underside.

At least one winch 114 is removably attached to the vehicle 100 on another side of the payload pay 102. As with the fixing point 110, a hole may be provided in the structure of the vehicle 100 into which the winch 114 can be inserted. The hole may be threaded. The winch 114 may have a corresponding protrusion for insertion into the hole in order to temporarily secure the winch 114 to the structure of the vehicle 100. The winching mechanism may be integral with this protrusion. In some other embodiments, the structure of the vehicle 100 may have a hook, or other protruding element, onto which the winch 114 can be attached. The hole, hook or other protruding element may be provided on a side wall of the internal payload bay 102 of the vehicle, close to the underside and substantially opposite the fixing point 110.

Within the payload bay 102, there is a payload attachment point 116 and at least two fixed runners 118. The runners 118 may also be described as pulleys. The runners 118 may comprise a rounded element around which the lifting strap 120 can slide as it is drawn in by the winch 114. Alternatively, the runners 108 may comprise a rotatable element which rotates as the lifting strap 120 is drawn in by the winch 114. The runners 118 may be permanent features of the payload bay 102.

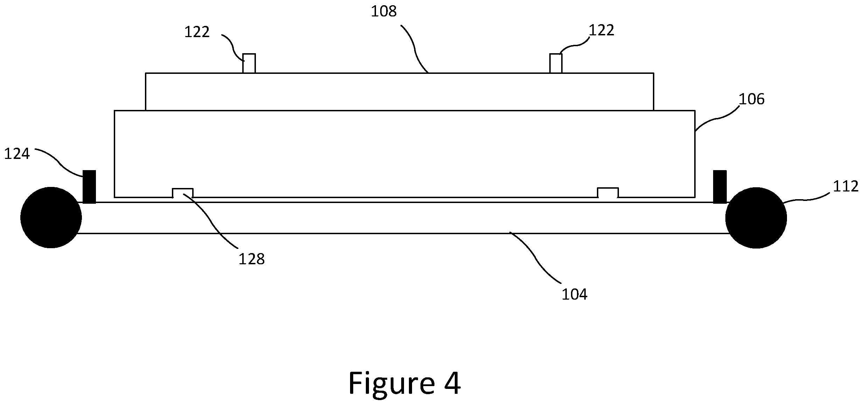

Figure 3 shows a lifting strap 120 which is secured between the winch 114 and the fixing point 110 and which passes over the runners 118. Once the lifting strap 120 is attached to the winch 114 and the winch is operated, the length of the lifting strap 120 decreases and the cradle 106 and payload 108 are lifted up into the payload bay 102. The lifting straps 120 may be configured to run freely around the fixed runners 118 (or pulleys) disposed within the payload bay 102. The lifting straps 120 may be configured to pass underneath the cradle 106 and to slide with respect to the cradle during lifting, as described in greater details with respect to Figures 4 to 6 below.

The payload transporter 104 may also comprise a plurality of alignment sensors 124 configured to allow the payload transporter 104 to be accurately positioned with respect to the payload bay 102 of the vehicle. The alignment sensors 124 may be disposed on the upper surface of the payload transporter 104, such that they have a clear line of sight around the cradle 106 to the underside of the vehicle 100. The underside of the vehicle may support alignment targets 126. Each alignment sensor 124 may comprise a light source and a light sensor for detecting light reflected from the underside of the vehicle 100 and from the alignment targets 126 in particular. The alignment sensors 124 may use visible or infra-red light.

The alignment sensors 124 may comprise alignment lasers configured to project a collimated beam of light directly upwards and a corresponding light sensor. The light sensors may be configured to detect when the respective laser beam is directly underneath an alignment target 126. In some embodiments, the alignment sensors 124 are replaced with only a light emitter, such as an alignment laser. The alignment target 126 may comprise easily identifiable areas or marks on the underside of the vehicle. The alignment lasers can project a beam of visible light onto the underside of the vehicle, to allow for visual verification of an alignment of the payload transporter with respect to the payload bay of the vehicle. Personnel who are loading the payload into the vehicle can then visually check that the alignment laser is aligned with the areas or marks.

The payload transporter 104 may support two alignment sensors 124, positioned on opposite sides of the payload transporter 104. The alignment sensors 124 may be offset with respect to the long axis of the payload transporter 104. For example, the alignment sensor 124 on a first side of the payload transporter 104 may be located towards the front of the payload transporter 104, while the alignment sensor 124 on a second side of the payload transporter 104 may be located towards the rear of the payload transporter 104. In this manner, the payload transporter 104 can be accurately positioned and orientated relative to the payload bay 102, so that the payload 108 is in the correct position to be secured within the payload bay 102.

In some other embodiments, the payload transporter 104 may support four alignment sensors 124, positioned in pairs on opposite sides of the payload transporter. These may be arranged as two alignment sensors 124 towards the front of the payload transporter 104 and two alignment sensors 124 towards the rear of the payload transporter 104. In an alternative arrangement, the payload transporter 104 could have three alignment sensors, positioned in a triangular arrangement, e.g. two alignment sensors at the front of the payload transporter 104 and one alignment sensor at the rear.

The apparatus thus comprises elements which are not permanently affixed to a vehicle, such as an aircraft. Weight is a significant factor in aircraft design and performance, and any weight which can be saved is therefore valuable. Since the fixing points 110, winches 114 and lifting staps 120 of the invention are only temporarily attached to the aircraft and removed before flight, a weight saving is obtained compared to installing a permanent lifting mechanism in the payload bay 102 of the aircraft.

The payload 108 has a payload attachment lug 122 configured to secure the payload to the payload attachment point 116. The payload attachment point 116 and payload attachment lug 122 may together be configured to automatically secure the payload 108 within the payload bay 102 when they meet. In this manner, a technician does not need to manually reach the payload attachment point 116 to secure the payload 108. An electrical connection may also be formed automatically at this time, to allow the payload 108 to be released via electronic signal. In some cases, the payload has several payload attachment lugs 122 and the payload bay 102 has several corresponding payload attachment points 116. Once the payload 108 is secured in the payload bay 102, the cradle 106 can be lowered back onto the payload transporter 104 by reversing the direction of operation of the winch 114. The payload transporter 104 can then be moved from underneath the vehicle 100 and the payload bay doors 101 closed.

The payload transporter 104 may also comprise a user interface (not shown) such as a display panel. Associated electronics, including a processor and memory, may be connected to the alignment sensors 124 and the user interface (if present). The user interface may provide an indication of whether each alignment sensor 124 is aligned with a respective alignment target 126. For example, the user interface may provide a crosshair with an indication of the position of the alignment sensor 124 relative to the crosshair. In some embodiments, the light sensor of each alignment sensor 124 may be a camera and the user interface may provide a direct camera feed, with a crosshair or other suitable feature superimposed onto the image feed. Alternatively, or in addition, each alignment sensor 124 may also comprise an indicator, such as an LED, which is configured to illuminate or flash when the alignment sensor 124 is corrected positioned underneath an alignment target 126.

The payload transporter may also have at least one motor for moving the payload transporter 104, for example, by driving the wheels 112 of the payload transporter 104.

In some embodiments, the user interface may be connected to the payload transporter 104 by a wired or wireless connection, e.g. the user interface may comprise a separate handheld unit. This may be advantageous, as a technician can view assess the alignment of the payload transporter 104, without needing to be directly underneath the vehicle 100 or even within line of sight of the payload transporter 104. A separate handheld user interface may also provide other functionality, such as the ability to control the movement of the payload transporter 104 and to operate the winch or winches 114. In this manner, once the lifting straps 120 are attached, a technician can position the payload transporter 104 correctly and lift the payload form a position away from the vehicle 100 and payload transporter 104. This may increase the safety of operating the payload transporter 104.

Referring to Figure 4, a side view of the payload transporter 104 is shown. As can be seen, alignment sensors 124 are positioned towards the front and rear of the upper surface of the payload transporter 104. The alignment sensors 124 may be positioned beyond the front and rear extremities of the cradle 106. Alternatively, the alignment sensors 124 may be located adjacent the side of the cradle, but with clear line of sight around the cradle 106. A payload 108 is shown supported in the cradle 106. In this example, the payload 108 has two payload attachment lugs 122 configured to engage with corresponding payload attachment points 116 in the payload bay 102.

The cradle 106 also has slots 128 to guide the one or more lifting straps 120 and to prevent the lifting straps 120 from slipping along the length of the cradle 106. The slots 128 may extend around the lower surface of the cradle 106 and around a portion of the sides, to the point at which the lifting strap 120 would be positioned vertically when lifting the cradle 106. Each of the slots 128 may have at least one roller (not shown) disposed therein to facilitate sliding of the lifting strap as the cradle 106 is lifted.

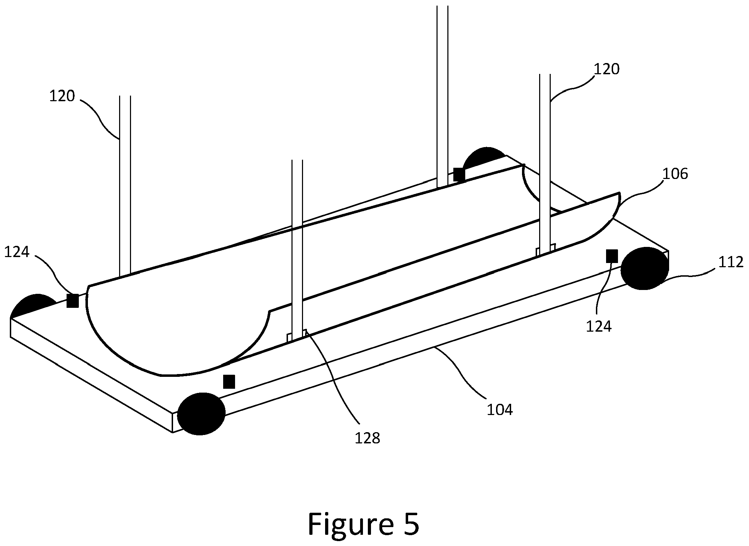

Referring to Figure 5, a perspective view of the payload transporter 104 is shown. In this embodiment, the payload transporter 104 supports four alignment sensors 124, located in pairs towards the front and rear of the payload transporter 104, and to the side of the cradle 106. Two lifting straps 120 are shown in position underneath and extending upwards for the cradle 106. Each lifting strap 120 is disposed in, and guided by, a respective slot 128 in the outer surface of the cradle 106. The lifting straps 120 may be fabric strips, wires or ropes.

In this embodiment, the apparatus comprises two lifting straps 120. Consequently, the apparatus also comprises two fixing points 110 configured to be removably attached to the vehicle 100 and two winches 114 configured to be removably attached to the vehicle 100. A first fixing point 110 may be configured to be secured to a first side surface of the internal payload bay 102 of the vehicle 100. The first fixing point 110 may be at or towards the front end of the internal payload bay 102. A second fixing point 110 may be configured to be secured to the first side surface of the internal payload bay 102 of the vehicle 100, at or towards the rear end of the internal payload bay 102. A first winch 114 may be configured to be secured to a second side surface of the internal payload bay 102 of the vehicle 100, substantially opposite the first fixing point 110. A second winch 114 may be configured to be secured to the second side surface of the internal payload bay 102 of the vehicle 100, substantially opposite the second fixing point 110. The first fixing point 110 and second fixing point 110 (and their respective winches 114) may alternatively be on opposite sides of the internal payload bay 102 of the vehicle 100.

Each lifting strap 120 is configured to be secured between a respective winch 114 and fixing point 110. The winches 114 may then be operated simultaneously to keep the cradle 106 level while it is being lifted.

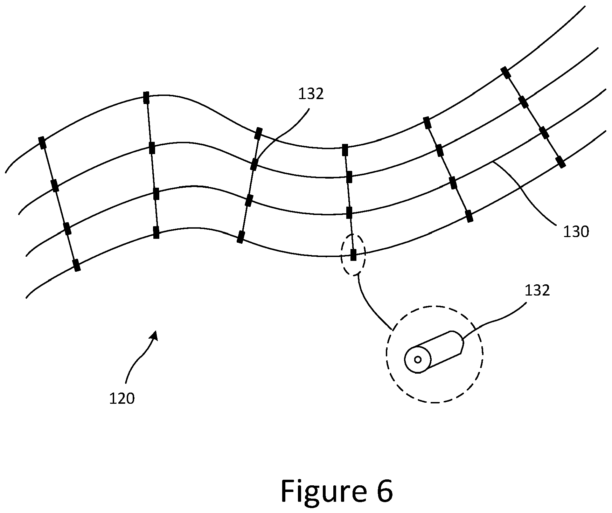

Referring to Figure 6, an alternative embodiment of a lifting strap 120 which may form part of the claimed apparatus is shown. This lifting strap 120 is formed of a mesh of cords 130 or wires. The cords 130 support a number of integrated rollers 132. Fabric may be provided between the cords 130. The rollers 132 each have a central bore through which the cords 130 pass. The rollers 132 protrude above the cords 130 and fabric of the lifting strap 120, if present. The rollers 132 facilitate sliding/movement of the lifting strap 120 relative to the cradle 106.

## Claims

1. An apparatus for loading a payload into a vehicle, the apparatus comprising:
a payload transporter comprising a cradle configured to support the payload;
one or more winches configured to be removably attached to a vehicle;
one or more fixing points configured to be removably attached to the vehicle; and
one or more lifting straps configured to be secured between the one or more winches and the one or more fixing points and to lift the cradle from the payload transporter into a payload bay of the vehicle.

2. The apparatus according to claim 1, wherein the payload transporter further comprises a plurality of alignment lasers configured to project a beam of visible light onto an underside of the vehicle, to allow for visual verification of an alignment of the payload transporter with respect to the payload bay of the vehicle.

3. The apparatus according to claim 1, wherein the payload transporter further comprises a plurality of alignment sensors configured to allow the payload transporter to be accurately positioned with respect to the payload bay of the vehicle.

4. The apparatus according to claim 3, wherein each of the plurality of alignment sensors comprises a light source and a light sensor for detecting light reflected from a respective alignment target disposed on the vehicle.

5. The apparatus according to claim 4, wherein the alignment sensors comprises alignment lasers configured to be directed at one or more laser alignment targets on the vehicle and a corresponding light sensor configured to detect the light reflected from the laser alignment targets.

6. The apparatus according to any of claims 3 to 5, wherein the apparatus comprises a user interface configured to indicate an alignment of the payload transporter with respect to the vehicle.

7. The apparatus according to any preceding claim, wherein the one or more lifting straps are configured to run freely around one or more fixed runners or pulleys disposed within the payload bay of the vehicle.

8. The apparatus according to any preceding claim, wherein the one or more lifting straps are configured to pass underneath the cradle and to slide with respect to the cradle during lifting.

9. The apparatus according to claim 8, wherein the cradle comprises one or more slots to guide the one or more lifting straps.

10. The apparatus according to claim 9, wherein each of the one or more slots has at least one roller disposed therein to facilitate sliding of the lifting strap.

11. The apparatus according to any of claims 8 to 10, wherein the one or more lifting straps each comprise a plurality of integrated rollers configured to facilitate sliding of the lifting strap.

12. The apparatus according to any preceding claim, wherein the payload transporter comprises a wheeled trolly.

13. The apparatus according to any preceding claim, wherein the payload transporter comprises at least one motor for moving the payload transporter.

14. The apparatus according to any preceding claim, wherein the apparatus comprises:
two fixing points configured to be removably attached to the vehicle;
two winches configured to be removably attached to a vehicle; and
two lifting straps, each lifting strap configured to be secured between a respective winch and fixing point.

15. The apparatus according to claim 14, wherein:
a first fixing point is configured to be secured to a first side surface of an internal payload bay of the vehicle, at or towards the front end of the internal payload bay;
a second fixing point is configured to be secured to the first side surface of the internal payload bay of the vehicle, at or towards the rear end of the internal payload bay;
a first winch is configured to be secured to a second side surface of the internal payload bay of the vehicle, substantially opposite the first fixing point; and
a second winch is configured to be secured to the second side surface of the internal payload bay of the vehicle, substantially opposite the second fixing point.
